**Europäisches Patentamt**

**European Patent Office**

**Office européen des brevets**

(19)

(11) Publication number : **0 186 361 B2**

(12) # NEW EUROPEAN PATENT SPECIFICATION

(45) Date of publication of the new patent specification : **27.04.94 Bulletin 94/17**

(51) Int. Cl.⁵ : **D06P 1/52**

(21) Application number : **85308928.2**

(22) Date of filing : **09.12.85**

(54) **Thickeners for thickening aqueous media.**

The file contains technical information submitted after the application was filed and not included in this specification

(30) Priority : **10.12.84 GB 8431150**
**24.01.85 GB 8501786**
**27.02.85 GB 8505076**

(43) Date of publication of application :
**02.07.86 Bulletin 86/27**

(45) Publication of the grant of the patent :
**12.09.90 Bulletin 90/37**

(45) Mention of the opposition decision :
**27.04.94 Bulletin 94/17**

(84) Designated Contracting States :
**BE CH DE FR GB IT LI NL SE**

(56) References cited :
**EP-A- 0 077 297**
**EP-A- 0 128 237**
**EP-A- 0 161 038**
**WO-A-83/00337**

(56) References cited :
**GB-A- 1 364 873**
**GB-A- 2 007 238**
**GB-A- 2 031 469**
**GB-A- 2 077 750**
**CHEMICAL ABSTRACTS, vol. 97, no. 20, 15th November 1982, page 77, abstract no 164479s, Columbus, Ohio, US**
**Ullmann, Encyclopädie der techn. Chemie,4th ed.,1982,vol.22,pp.461-462, 482-483, 488-489**
**Zeitschrift für die Fett-, Oel-, Kosmetik-, Pharma- und Waschmittelindustrie, 110. Jahrgang, no. 20/1984, pp. 599-602**

(73) Proprietor : **SCOTT BADER COMPANY LIMITED**
**Wollaston**
**Wellingborough Northamptonshire NN9 7RL (GB)**

(72) Inventor : **Chaudhry, Arshad-Ul-Haq**
**18, Wentworth Avenue**
**Wellingborough Northants (GB)**

(74) Representative : **Coleiro, Raymond et al**
**MEWBURN ELLIS 2 Cursitor Street**
**London EC4A 1BQ (GB)**

EP 0 186 361 B2

## Description

Field of the invention

This invention relates to thickeners for, and methods of, thickening aqueous media, particularly those which contain high concentrations of electrolyte such as drilling muds, detergents, cleaners, slurries of blasting agents, and especially printing pastes, more especially those for printing textile materials, which pastes contain dyestuffs, especially reactive, disperse, pigment, mordant and direct dyes.

Background of the invention

GB-A-2017159 discloses the thickening of reactive dye-containing printing pastes with (meth)acrylamide homopolymers and copolymers in the form of swollen beads. However, these beads tend to block the screens of screen printing machines and provide a paste which is not particularly smooth.

GB-A-2077750 describes the thickening of an aqueous based composition by adding thereto a water-in-oil emulsion of a water-soluble (meth)acrylamide homopolymer or copolymer, which homopolymer or copolymer is present in solution in the aqueous phase of the water-in-oil emulsion. Example 3 thereof describes the thickening of unspecified textile pigment printing pastes with a water-in-oil emulsion of an acrylamide/ammonium acrylate copolymer crosslinked with 0.50% of allyl methacrylate. These thickeners allow the thickening to take place more quickly than with conventional thickeners and provide a paste with improved smoothness.

However, pastes such as those described above which employ, as the sole thickener, a non-ionic, or predominantly non-ionic thickening polymer tend to have poor rheological properties. In particular, their viscosity tends to change when the paste is subjected to the shear forces which obtain in conventional printing processes. A similar viscosity change occurs when using known acrylic acid homopolymers as thickeners (see EP-A-0077297). Furthermore, it is necessary to neutralize such acrylic acid polymers before use.

EP-A-0077297 teaches the use of a mixture of both acrylic acid and a copolymer thereof with an acrylamide and recommends the use of a water-in-oil emulsion of the polymer mixture. According to EP-A-0077297, a printing paste containing such a mixture of polymers does not experience the abovementioned change in viscosity when applied to a textile material by a conventional printing technique.

GB-A-2007238 also discloses the use of a mixture of polymers, namely of water soluble and water-swellable polymers, both of which are predominantly acrylamide polymers.

Some of the above polymers consist partially of ionic groups. Certain of the special properties of ionic polymers in aqueous solution can be considered to be due to the presence of macro-ions i.e. high molecular weight charged moieties but even aqueous solutions of ionic polymers are sensitive to the presence of added simple electrolytes. In general the salts depress the viscosity of the polyelectrolyte solution over a wide range of concentrations. Even the electrolyte in a conventional disperse dye can cause a substantial drop in viscosity (see "Textile Printing", LC.W. Miles p.232-264).

We also find that the known pastes referred to above tend to give poor results under the conditions necessary for printing other dyestuffs, especially reactive dyestuffs.

Thus reactive dyes differ from other colouring materials in that they enter into chemical reaction with cellulose and some other fibres during the dyeing process and so become part of the fibre; see Kirk Othmer Encyclopaedia of Chemical Technology 1979, v8, pages 374-392, This reaction involves, for example, the hydroxyl groups on cellulose fibres, which reaction has been shown to be ionic in character. The ionisation of the hydroxyl groups increases with increasing alkalinity and above a pH of 8 there are sufficient ionised hydroxyl groups to allow the reaction of enough dye molecules to give any normal depth of shade.

In the practical application of a printing paste containing a reactive dye to a textile material the desired pH is obtained by the addition to the paste of alkaline materials such as sodium hydrogen carbonate.

Such paste contain large amounts of electrolyte. Indeed the reactive dye itself is an electrolyte. This addition of electrolyte to pastes containing the known thickeners described above causes an undesirable reduction in their viscosity.

W/O-A-83/00337 describes the preparation of a water-in-oil emulsion of a water-soluble polymer in which the polymer is in solution in the aqueous phase of the emulsion. In this method a portion of a water soluble inverting surfactant is added to a water-in-oil emulsion of the monomer from which the polymer is derived and, after polymerization, a further portion of water soluble inverting surfactant is added to the resultant water-in-oil emulsion of the polymer. This method enables a larger amount of polymer to be dissolved in the water on inversion so as to increase the viscosity of the thickened aqueous medium. Such water-in-oil emulsions are said to be effective as fluid mobility control agents in the presence of dissolved salts, though there is no reference to thickening of printing pastes.

A further disadvantage associated with the use of water soluble polymers in the form of inverse emulsions for thickening printing pastes, such as the acrylamide polymer emulsions described in EP-A-0077297, is that the use of such polymer emulsions gives prints with a harsh handle [see P. Bajaj et al, Colourage 1982, 29 (20), 7]. The result has been that up till now it has been necessary to include softeners in the print paste to obtain the desired handle in the finished prints.

Surprisingly, we have found a thickener which can be used for successfully and economically thickening an aqueous medium, especially a printing paste containing a colouring matter especially a reactive, disperse or pigment dye of mixture thereof without the abovementioned disadvantages.

According to a first aspect of the invention there is provided a thickener which comprises a polymer in the form of a water-in-oil emulsion. i.e. an emulsion of an aqueous phase containing the polymer in a continuous organic medium immiscible with water, the polymer being present in solution in the aqueous phase of the emulsion which polymer contains residues derived from unsaturated monomer or monomers at least some of which residues contain an ionisable, preferably anionic, group so that the polymer is partially or essentially wholly ionic in nature, but the polymer of which includes a minor, crosslinking part, which part is derived from a small proportion, preferably 0.0005 to 5%, based on the total weight of polymerizable monomers, of at least one crosslinking monomer containing at least two unsaturated groups and capable of crosslinking, which thickener additionally contains an ionic surfactant, present in a large amount, namely at least 20% by weight of solid polymer, which ionic surfactant is soluble to a greater extent in the oil phase of the water-in-oil emulsion than in the water phase.

A thickener in accordance with the invention is capable of increasing the viscosity of an aqueous medium containing an electrolyte to an extent which is at least as great as the content to which the thickeners will increase the viscosity of a corresponding aqueous medium from which the electrolyte is absent.

Other aspects of the invention respectively provide a method of thickening a printing paste with the abovementioned thickener, a printing paste containing it and a method of dyeing a textile fabric with a printing paste to thickened.

The method of thickening comprises incorporating in the aqueous medium a water-in-oil emulsion, the water phase of which has, in solution therein, a water soluble polymer which is partially or essentially wholly ionic in nature so as to contain ionisable residues derived from at least one unsaturated monomer and additionally including a minor, crosslinked part derived from at least one crosslinking monomer containing at least two unsaturated groups, which method is characterised in that the method additionally includes incorporating in the aqueous medium to be thickened at least 20%, by weight of solid said polymer, of an ionic surfactant, which ionic surfactant is soluble to a greater extent in the oil phase of the water-in-oil emulsion than in the water phase.

The water-in-oil emulsion of the polymer may be prepared an in-situ polymerization in which the polymer emulsion is prepared directly from the constituent monomers by a so-called inverse emulsion polymerization technique in which a water-in-oil emulsion of an aqueous solution of the monomers is formed, in the presence of a catalytic amount of a free radical-yielding initiator so as to effect polymerization, the monomers being so chosen, and the process being so controlled, that the polymer product is in solution in the aqueous phase of a water-in-oil emulsion product. This product is useful, in this form, as a thickener of the present invention and need not be neutralized before use.

Preferred ionisable unsaturated monomers are anionic and suitable monomers are acrylic acid, methacrylic acid, their alkali metal and ammonium salts, 2-acrylamido-2-methyl-propanesulphonic acid, 2-sulphoethyl methacrylate, styrene phosphonic acid, sodium styrene sulphonate and phosphonic acid derivatives of (meth)acrylates and mixtures of any of these with one another. The resultant polymer may be essentially a homopolymer or a copolymer containing two or more such monomers.

The crosslinking monomers that can be used include allyl methacrylate, methylene bis acrylamide, diallyl phthalate, diallyl urea, glycol di-(meth) acrylates, triallyl cyanurate, triallyl isocyanurate, polyfunctional alkylene ethers and mixtures of any of these with one another. They are especially preferably present in an amount by weight of from 0.04-2% depending upon the conditions of use of the printing paste to be thickened. An amount of cross-linking agent often preferred is below 1%.

The thickener in accordance with the invention is suitable for thickening aqueous media, particularly those which contain high concentrations of electrolyte such as drilling muds, detergents, cleaners, and slurries of blasting agents, but is especially suitable for thickening pastes containing reactive, disperse, pigment, mordant or direct dyes or mixtures of any of these with each other.

Typical fabrics to be printed include cellulosic fibres such as cotton and regenerated cellulosic fibres such as cellusose acetate, synthetic fibres such as polyesters and acrylics and mixtures of cellulosic and synthetic fibres, e.g. cotton/polyester fibres.

A particular preferred polymer is derived at least mainly from acrylic acid but the choice of preferred unsaturated monomer(s) will vary with the choice of dyestuff as later described in more detail.

A thickener in accordance with the invention carries with it the following advantages:

It is fully compatible with a wide range of dyestuffs and application conditions and indeed as later described the choice of unsaturated and crosslinkig monomers and the amount of crosslinking monomer may be tailored to suit a chosen dyestuff and/or its conditions of application.

The requirement for the addition of modifying components may be eliminated, especially by selecting, in advance, a particular monomer for use with a given dyestuff and/or its conditions of application. Thus the need to blend the polymer with other thickeners or adjust the pH of the thickener, for example, to effect neutralization, can be avoided.

The thickener provides a particularly smooth paste which does not tend to block the screens of screen printing machines nor reduces in viscosity as a result of the shear forces experienced in conventiional printing techniques.

The tolerance of the thickener to the presence of electrolytes is especially high and can be rendered even higher by selection of particular monomers and the degree of crosslinking.

Thus, as previously explained, reactive dyes are applied at a pH of from about 8-9 in the presence of relatively large of electrolyte. For such conditions, we find that the sodium salt of the ionic groups of unsaturated monomers such as acrylic acid have an especially high electrolyte resistance; in other words their viscosity is not reduced by the presence of such large quantities of electrolyte.

However, for the application of pastes containing pigment dyes (also applied at a pH of from 8-9) and disperse dyes (generally applied at a pH of from 6-7.5), the ammonium salt of the anionic groups of the unsaturated monomer such as acrylic acid is preferred.

Thus, with this knowledge, the user may select the particular unsaturated monomer in dependence upon the dyestuff and conditions of application to be encountered.

As previously mentioned, the water-in-oil emulsions may be prepared by the so-called inverse emulsion polymerization technique. This is preferably carried out by forming a water-in-oil emulsion of an aqueous solution of the monomers within an organic medium such as white mineral oil or paraffin or mixtures thereof, wherein the organic medium contains a surfactant or mixture of surfactants each having a hydrophobe/lypophile balance (HLB) below 9.

This surfactant will be present in the final product produced by the process, and the product of the above process may be used directly as a thickener. However, there must be includes either in the thickener or in the printing paste to be thickened thereby a further surfactant, hereinafter called a "thickener surfactant", which will assist release of the dispersed droplets of polymer solution uniformly into the printing paste.

Good results may be achieved using an oil-soluble thickener surfactant which, when added to the thickener, will be present in solution in the continuous phase of the water-in-oil emulsion. We find that particularly good results are achieved when using, as thickener surfactant, a dioctyl ester of sodium sulphosuccinate. This gives an especially stable thickened printing paste having especially high electrolyte resistance. Furthermore, it enables lower quantities of polymer to be used for achieving the same high viscosity.

We have surprisingly found that a thickener system, which may contain either a wholly ionic water soluble polymer, or which may even contain a water soluble polymer which is only partially ionic, but which contains at least 20% by weight of solid said polymer, of the abovementioned oil soluble ionic surfactant, can be used to thicken compositions which do not suffer a drop in viscosity upon the addition of large amounts of electrolytes. Indeed such thickened compositions can show an increase in viscosity upon the addition of electrolytes, the viscosity increase being dependent upon the amount of surfactant used. This is unique and contrary to all the known properties of polyelectrolytes.

The oil soluble ionic surfactant. i.e. the surfactant which is soluble to a greater extent in the oil phase of the water-in-oil emulsion than in the water phase thereof, preferably has a solubility in at least one organic liquid capable of use as an oil phase of a water-in-oil emulsion of at least 10%, especially up to 50%, by weight of solution.

The thickener system contains at least about 20% of the oil soluble surfactant based on the weight of solids polymer of the polymer component. At the minimum level, a slight decrease in viscosity on addition of electrolyte to a thickened medium may occur but, in general, such decreases are of an acceptable order. Preferably, however, the solid surfactant/polymer weight ratio is at least 30%.

The oil soluble ionic surfactant may be present in the water-in-oil emulsion. Alternatively, the oil soluble ionic surfactant may be separate from the water-in-oil emulsion, in which case it may be added to the medium to be thickened either before, simultaneously with, or after addition of the water-in-oil emulsion.

Particularly rapid thickening can be achieved using a mixture of surfactants. The ratio of total solid surfactant/solid polymer, the particular surfactant or surfactants used and, where a mixture is used, the proportional amounts of surfactant in the mixture can be selected to achieve an especially rapid and efficient thickening without a decrease in viscosity occurring on addition of electrolyte.

Suitable, anionic surfactants include alkali metal salts of alkyl aryl sulphonic acids, sodium bis tridecyl sulphosuccinate, sodium dioctyl sulphosuccinate and mixtures thereof. Suitable cationic surfactants include quaternary ammonium compounds and derivatives of fatty amines and amides.

As mentioned above, the polymer component of the thickener is present in solution in the aqueous phase of the water-in-oil polymer emulsion.

The polymer component may consist of a polymer each of the residues of which, apart from minor amounts of polyfunctional monomer which may be present, is ionisable (a wholly ionic polymer), a polymer some of the residues of which are ionisable and some of which are non-ionisable (a partially ionic polymer), or a mixture of a wholly ionic or partially ionic polymer with a non-ionic polymer such as a mixture of a wholly ionic synthetic polymer with a non-ionic synthetic or natural organic polymer.

Water soluble polymers which are particularly compatible with the preferred oil soluble surfactants are those made wholly or partially of ionic monomers or mixtures of polymers containing ionic groups and polymers having no ionic character.

Suitable anionic monomers from which the water soluble polymers may be derived include acrylic acid, methacrylic acid, 2-acrylamido-2-methyl propanesulphonic acid, 2-sulphoethyl methacrylate, styrene phosphonic acid, their alkali metal and ammonium salts. sodium styrene sulphonate and mixtures of any of these with one another.

Suitable cationic monomers from which the water soluble polymers may be derived include dimethylaminoethyl(methyl) acrylate and quaternised derivatives, diallyl dimethyl ammonium chloride, diallyl diethyl ammonium chloride and mixtures of any of these with one another.

The monomers having no ionic character which may provide residues in a partially ionic or non-ionic water soluble polymer include acrylamide, methacrylamide and vinyl pyrrolidone.

Minor amounts of polyfunctional monomers may be incorporated into the water soluble polymer to provide the correct balance of properties. Suitable polyfunctional monomers include difunctional monomers such as diallyl urea, methylene bis acrylamide, allyl methacrylate, diallyl phthalate, glycol di(meth) acrylate, triallyl cyanurate, triallyl isocyanurate and polyfunctional poly alkylene ethers. Such monomers are preferably used in amounts of 0.005-2% by weight of the total monomers, usually below 0.5%.

The water soluble polymers may be made by any of the well known techniques but, as mentioned above are most conveniently prepared by the inverse emulsion process. This may be accomplished by:-

a) preparation of an aqueous solution of monomers,

b) emulsification of the aqueous phase in an oil phase containing oil soluble surfactant or a mixture of oil soluble surfactants each having a HLB value below 9 or being monomer compatible, and

c) polymerization of the monomers within the dispersed aqueous phase using standard free radical yielding initiators.

The water soluble copolymers are thus obtained as a fine dispersion of an aqueous solution of the copolymer in a non aqueous continuous phase.

In a thickener embodying the present invention at least part of the oil phase of the water-in-oil emulsion of the water soluble polymer may be a silicone oil.

We have found that printing pastes thickened by the use of such "inverse" emulsions of water soluble polymers in which the continuous (oil) phase consists wholly, or in part, of a silicone oil give prints which are softer than those in which the continuous phase is wholly hydrocarbon or halogenated hydrocarbon, and thus give improved handle to the printed fabric.

The softness obtained is proportional both to the amount of silicone oil of a given viscosity used, and to the viscosity of the silicone oil used for a given amount.

The silicone oils useful in this invention include those from dimethyl polysiloxane and methyl hydrogen polysiloxane. These are commercially available as Fluid 200™ range from Dow Corning and Tegiloxan™ range ex T. H. Goldsmith, respectively.

When the silicone oil is a minor constituent of the continuous phase, it can be added to the inverse emulsion thickener latex after polymerisation has been completed or the appropriate amount can be added directly to the print paste formulation.

## Description of preferred embodiments

Thickeners embodying the invention will now be described in more detail with reference to the following Examples.

In the Examples, trade names are indicated by*.

All viscosity measurements were made with a Brookfield* RVT, spindle 6, speed 5 at 25°C.

Colour Index Numbers of colourants used in the examples.

Cibacron* range of reactive dyes.

| | | |
|---|---|---|
| 1 | Black BG-200% | C.I. reactive black 1 |
| 2 | Violet 2R | C.I. reactive violet 2 |
| 3 | Brown 4GR | C.I. reactive brown 2 |
| 4 | Navy T2R | C.I. reactive blue 10 |
| 5 | Brown 6R—150% | C.I. reactive brown 11 |
| 6 | Golden Yellow 2R and 2R-A | C.I. reactive orange 12 |
| 7 | Orange 2-R | C.I. reactive orange 13 |
| 8 | Blue 2R and 3R | C.I. reactive blue 49 |
| 9 | Red B | C.I. reactive red 24 |
| 10 | Orange 4R | C.I. reactive orange 35 |
| 11 | Navy G—150% | C.I. reactive black 39 |
| 12 | Red 3B | C.I. reactive red 45 |
| 13 | Turquoise 6R | C.I. reactive blue 72 |
| 14 | Yellow 6G | C.I. reactive yellow 95 |
| 15 | Red 6F—150% | C.I. reactive red 218 |

Terasil* range of disperse dyes

| | | |
|---|---|---|
| 16 | Violet X-B | C.I. disperse violet 57 |
| 17 | Blue X-2G | C.I. disperse blue 87 |
| 18 | Yellow X-5R | C.I. disperse orange 53 |
| 19 | Navy X-2R | C.I. disperse blue 310 |

Aquarine* range of pigment dyes

| | | |
|---|---|---|
| 20 | Blue 3GW | C.I. pigment blue 15:2 |

Examples 2 and 4-7 illustrate thickeners embodying the invention in which a large amount of an oil soluble ionic surfactant is employed. Examples 1 and 3 are comparative. In Examples 4 and 6 and experiment No.60 of Examples 5 and 7, the thickener contains a polymer which is essentially wholly ionic in nature, while in the remainder of these Examples, the thickener contains a polymer which is only partially ionic.

Example 1

A partially ionic copolymer containing 19 mole % sodium acrylate and 81 mole % acrylamide plus 0.02% by weight of total monomers of methylene bis acrylamide was prepared by the preferred inverse emulsion process and the resultant latex had polymer solids content of 26.2% by weight.

A reactive dye base was made consisting of an aqueous solution containing 10% urea, 3% sodium hydrogen carbonate and 1% of a dye reduction inhibitor (all by weight).

Various combinations of dye base, water soluble surfactants and polymer were made and their viscosities measured before and after addition of a reactive dye and sodium chloride.

These results are shown in Table I and it can be seen that normal behaviour on inversion of the inverse emulsion by means of water soluble surfactants ocurred and that (a), the viscosity decreases on the addition of electrolytes, (b) the lower the polymer concentration the lower the viscosity prior to addition of electrolyte.

TABLE I
Effect of electrolytes on viscosity of dye pastes thickened
by inverse emulsions in presence of water soluble surfactants
All experiments were made using 81% by weight of the thickened
paste of reactive dye base.
Electrolytes: A  Cibacron* Golden Yellow 2R     B  sodium chloride

| Expt | Ethylan* BCP (% weight) | Polymer Ex. 1 (% weight) solid | Viscosity cps $(10^{-3}$ Pa.s) | Electrolyte conc & type | | Viscosity cps $(10^{-3}$ Pa.s) |
|---|---|---|---|---|---|---|
| 1 | 0.6 | 2.88 | 36,000 | A | 7 | 15,000 |
| 2 | 1.8 | 2.36 | 9,000 | A | 7 | 3,000 |
| 3 | 2.4 | 2.10 | 4,000 | A | 7 | below 1,000 |
| 4 | 3.0 | 1.84 | below 1,000 | A | 7 | below 1,000 |
| 5 | 3.0 | 1.84 | below 1,000 | B | 1 | below 1,000 |
| 6 | 3.0 | 1.84 | below 1,000 | B | 2 | below 1,000 |
| 7 | 3.0 | 1.84 | below 1,000 | B | 4 | below 1,000 |
| 8 | 3.0 | 1.84 | below 1,000 | B | 8 | below 1,000 |
| 9 | 0.9 | 2.88 | 36,000 | B | 1 | 31,000 |
| 10 | 0.9 | 2.88 | 36,000 | B | 2 | 27,000 |
| 11 | 0.9 | 2.88 | 36,000 | B | 4 | 24,000 |
| 12 | 0.9 | 2.88 | 36,000 | B | 8 | 21,000 |

Replacement of the water soluble surfactant Ethylan* BCP (A 9-mole ethoxylated nonyl phenol) by Ethylan* TU (an 8-mole ethoxylated nonyl phenol), Tween* 20 a 20-mole oxyethylate monolauric acid-HLB 16.7, Tween* 40 (a 20-mole oxyethylated monopalmitic acid-HLB 15.6), Tween* 60 (a 20-mole oxyethylated monostearic acid-HLB 14.9), Tween* 80 (a 20-mole oxyethylated monooleic acid-HLB 15), Texofor* D40 (an ethoxylate derived from glyceride oils), Texofor* 65A30P and Texofor* T95 (all non ionic water soluble surfactants) gave similar results to those shown for Ethylan* BCP in Table I.

Example 2

Using the polymer emulsion described in Example 1 but employing an oil soluble surfactant in place of a water soluble surfactant a different picture is obtained. Firstly there is no significant difference in base viscosity as the amount of polymer is reduced and the oil soluble surfactant is increased and secondly the viscosity increases on the addition of electrolyte either in the form of reactive dye or sodium chloride.

This is illustrated in Table II.

This effect is not confined to one dyestuff as is shown in Table III.

7

TABLE II

| Expt | Reactive dye base (% wt) | Oil soluble surfactant (% wt) | Polymer solids (% wt) | Base viscosity cps $(10^{-3}$ Pa.s) | Water (% wt) | Electrolyte type & wt | | Viscosity cps $(10^{-3}$ Pa.s) |
|---|---|---|---|---|---|---|---|---|
| 13 | 81 | 0.6 | 2.88 | 44,000 | — | A | 7 | 29,000 |
| 14 | 81 | 1.2 | 2.62 | 44,000 | — | A | 7 | 38,000 |
| 15 | 81 | 1.8 | 2.36 | 43,000 | — | A | 7 | 55,000 |
| 16 | 81 | 2.4 | 2.10 | 43,000 | — | A | 7 | 66,000 |
| 17 | 81 | 3.0 | 1.84 | 42,000 | — | A | 7 | 84,000 |
| 18 | 81 | 3.0 | 1.84 | 42,000 | — | B | 1 | 60,000 |
| 19 | 81 | 3.0 | 1.84 | 42,000 | — | B | 2 | 110,000 |
| 20 | 81 | 3.0 | 1.84 | 42,000 | — | B | 4 | 140,000 |
| 21 | 81 | 3.0 | 1.84 | 42,000 | — | B | 8 | above 200,000 |
| 22 | 80 | 3.0 | 1.84 | 42,000 | 6 | A | 2 | 47,000 |
| 23 | 80 | 3.0 | 1.84 | 41,000 | 4 | A | 4 | 61,000 |
| 24 | 80 | 3.0 | 1.84 | 38,000 | 2 | A | 6 | 73,000 |
| 25 | 80 | 3.0 | 1.84 | 38,000 | 0 | A | 8 | 89,000 |

A=Cibacron* Golden Yellow—2B
B=Sodium chloride.

TABLE III
Effect of reactive dyes on viscosity of dye pastes
All contain, by weight of the thickened printing paste, 82% reactive
dye base, 3.0% solid dioctyl sodium sulphosuccinate, and 1.84% solids
polymer provided by the latex of Example 8 to give a base
viscosity of 42,000 cps (42 Pa.s).

| Reactive dye at 6% (Cibacron* range) | | Viscosity (cps) $(10^{-3}$ Pa.s) |
|---|---|---|
| 26 | Navy G—150% | 58,000 |
| 27 | Turquoise 6R—150% | 59,000 |
| 28 | Violet 2R | 63,000 |
| 29 | Black BG—200% | 68,000 |
| 30 | Red B | 72,000 |
| 31 | Yellow 6B | 79,000 |
| 32 | Golden Yellow 2R | 80,000 |
| 33 | Orange 2R | 82,000 |
| 34 | Brown 6R—150% | 83,000 |

Example 3

An ionic homopolymer was made by inverse emulsion polymerisation of sodium acrylate with the incorporation of 0.02% diallyl urea and 0.02% methylene bis-acrylamide (both by weight based on total polymerisable material). The resulting latex had polymer solids content of 27.3% by weight.

A reactive dye base was made as in Example 1 and various combinations of dye base, water soluble surfactant and polymer were made and their viscosities measured before and after the addition of a reactive dye.

The results are shown in Table IV and the same effects as in Example 1 were noted viz:-

(a) the viscosity reduces on the addition of an ionic reactive dye, or

(b) the lower the polymer concentration the lower the viscosity prior to addition of electrolyte.

Replacement of the water soluble surfactant by other water soluble surfactants as in Example 1 gave similar results.

TABLE IV
Effect of reactive dyes on viscosity of dye pastes thickened
by inverse emulsion in presence of water soluble surfactants
All experiments were made using 82% by weight of the thickened printing
paste of reactive dye base.

| Expt | Water soluble surfactant | Polymer (% solids) | Viscosity (cps) $(10^{-3}$ Pa.s) | Cibacron* golden yellow 2R (%) | Viscosity (cps) $(10^{-3}$ Pa.s) |
|---|---|---|---|---|---|
| 35 | 0.6 | 3.14 | 40,000 | 7 | 3,000 |
| 36 | 1.8 | 3.00 | 23,000 | 7 | 1,000 |
| 37 | 2.4 | 2.73 | 10,000 | 7 | below 1,000 |
| 38 | 3.0 | 2.46 | 2,000 | 7 | below 1,000 |

Example 4

Using the polymer described in Example 3 but employing an oil soluble surfactant in place of a water soluble surfactant a different picture is obtained as can be seen from Table V.

TABLE V

3706

| Expt | Reactive dye base (% wt) | Oil soluble surfactant | Polymer (% solid) | Viscosity (cps) $(10^{-3}$ Pa.s) | Reactive dye (%) | Viscosity (cps) $(10^{-3}$ Pa.s) |
|---|---|---|---|---|---|---|
| 39 | 82 | 0.6 | 3.00 | 26,000 | 6 | 2,000 |
| 40 | 82 | 1.2 | 2.73 | 30,000 | 6 | 5,000 |
| 41 | 82 | 1.8 | 2.46 | 36,000 | 6 | 41,000 |
| 42 | 82 | 2.4 | 2.18 | 40,000 | 6 | 54,000 |
| 43 | 82 | 3.0 | 1.91 | 48,000 | 6 | 82,000 |
| 44 | 80 | 3.0 | 1.91 | 46,000 | 2 | 55,000 |
| 45 | 80 | 3.0 | 1.91 | 46,000 | 4 | 68,000 |
| 46 | 80 | 3.0 | 1.91 | 46,000 | 6 | 84,000 |
| 47 | 80 | 3.0 | 1.91 | 46,000 | 8 | 95,000 |

### TABLE VI
#### Effect of reactive dyes on viscosity of dye pastes
All contain, by weight of thickened printing paste, 82% reactive dye base, 3.0% solid oil soluble surfactant, and 1.91% solids polymer provided by the latex of Example 30 to give a base viscosity of 48,000 cps (48 Pa.s).

| Expt | Reactive dye at 6% (Cibacron* range) | Viscosity (cps) ($10^{-3}$ Pa.s) |
|---|---|---|
| 48 | Red 3B | 67,000 |
| 49 | Orange 4R | 80,000 |
| 50 | Black BG—200% | 84,000 |
| 51 | Red 6B—150% | 88,000 |
| 52 | Red B | 92,000 |
| 53 | Yellow 6G | 94,000 |
| 54 | Brown 6R—150% | 103,000 |
| 55 | Orange 2R | 104,000 |
| 56 | Blue 2R | 119,000 |
| 57 | Brown 4GR | 124,000 |
| 58 | Navy T2R | 128,000 |

Example 5

Polymer emulsions from Examples, 1 and 3, but containing an oil soluble surfactant, were used to thicken a mixture of textile colorants viz (parts by weight):-

reactive dye-Cibacron* Blue 3-R    45.5%
disperse dye-Terasil* Blue X-2G    38.3%
disperse dye-Terasil* Violet X-B    16.4%

The colorant base consisted of an aqueous solution of 10% urea, 3% sodium hydrogen carbonate and 1% Calgon* T which was 82.5% of the composition. An oil soluble surfactant was incorporated at 3%.

### TABLE VII
#### Effect of polymer on thickening

| Expt | Polymer | Polymer (%) | Viscosity (cps) ($10^{-3}$ Pa.s) | Colorant mixture (%) | Viscosity (cps) ($10^{-3}$ Pa.s) |
|---|---|---|---|---|---|
| 59 | Example 8 | 1.84 | 48,000 | 5.5 | 58,000 |
| 60 | Example 10 | 1.91 | 46,000 | 5.5 | 60,000 |

These again show the increase in viscosity upon addition of colorant mixture.

Example 6

Reactive dye print pastes prepared to demonstrate the usefulness of the present invention (Tables III and VI, experiments 26-34 and 48-58) were used for printing cotton furnishing fabric.

Printing conditions:
Zimmer* laboratory machine
Rod diameter 15 mm
Printing speed    3
Pressure    5  } machine settings

Fixation: steamed 10 minutes at 100°C; 100% R.H.

Wash off: cold rinser, followed by 5 minutes in boiling water containing 0.3% soap flakes, followed by cold rinse.

Results: All printing properties were good.

Example 7

Print paste, containing mixtures of colorants prepared to demonstrate the usefulness of the present invention (Table VII, experiments 59 and 60) were used for printing a blended fabric containing 67% polyester and 33% cotton. 4

Printing conditions were the same as for Example 4.

Fixation: 4 minutes with dry heat at 150°C.

Wash off: As per Example 4.

Results: All printing properties were good.

## Claims

1. A thickener for thickening an aqueous medium containing an electrolyte which thickener comprises a water-in-oil emulsion, the water phase of which has, in solution therein, a water soluble polymer which is partially or essentially wholly ionic in nature so as to contain ionisable residues derived from at least one unsaturated monomer and additionally including a minor, crosslinked part derived from at least one crosslinking monomer containing at least two unsaturated groups, characterised in that the thickener additionally contains an ionic surfactant, present in a large amount of at least 20%, by weight of solid said polymer, which ionic surfactant is soluble to a greater extent in the oil phase of the water-in-oil emulsion than in the water phase.

2. A thickener according to claim 1, wherein the water soluble polymer is partially ionic and partially non-ionic.

3. A thickener according to claim 1 or 2, which contains at least 30%, by weight of the solid said polymer, of the said ionic surfactant.

4. A thickener according to any preceding claim, wherein the said ionic surfactant is an anionic surfactant selected from alkali metal salts of alkyl aryl sulphonic acids, sodium bis tridecyl sulphosuccinate, sodium dioctyl sulphosuccinate and mixtures thereof.

5. A thickener according to any one of claims 1 to 4, wherein the ionic surfactant is a cationic surfactant selected from quaternary ammonium compounds and derivatives of fatty amines and amides.

6. A thickener according to claim 2, wherein the non-ionic residues are derived from acrylamide, methacrylamide and vinyl pyrrolidone.

7. A thickener according to claim 2 or 6, wherein the ionisable residues of the said partially ionic polymer provide said anionic ions.

8. A thickener according to claim 7, wherein the anionic ions are provided by residues derived from a said unsaturated monomer selected from acrylic acid, methacrylic acid, 2-acrylamido-2-methyl propane-sulphonic acid, 2-sulphoethyl methacrylate, styrene phosphonic acid, and the alkali metal salts thereof, and sodium styrene sulphonate and mixtures thereof.

9. A thickener according to claim 1, 2 or 6, wherein the ionisable residues of the said partially ionic polymer provide cationic said ions.

10. A thickener according to claim 9, wherein the cationic ions are provided by residues derived from a said unsaturated monomer selected from dimethylaminoethyl acrylate and methacrylate, quaternised derivatives thereof, diallyl dimethyl ammonium chloride, diallyl diethyl ammonium chloride and mixtures thereof.

11. A thickener according to claim 1, wherein the water soluble polymer is essentially wholly anionic in nature.

12. A thickener according to claim 11, wherien the anionic ions are provided by residues derived from a said unsaturated monomer selected from acrylic and methacrylic acids, alkali metal and ammonium salts thereof, 2-acrylamido-2-methyl-propane-sulphonic acid, 2-sulphoethyl methacrylate, styrene phosphonic acid, sodium styrene sulphonate, phosphonic acid derivatives of acrylates and methacrylates, and mixtures of any of these with one another.

13. A thickener according to any preceding claim, wherein the said crosslinking monomer is present in the polymer in an amount of from about 0.0005 to about 5%, based on the total weight of monomers.

14. A thickener according to any preceding claim, wherein the crosslinking monomer is allyl methacrylate, methylene bis acrylamide, diallyl phthalate, diallyl urea, a glycol diacrylate or methacrylate, triallyl cyanurate or isocyanurate, a polyfunctional alkylene ether, or a mixture of any of these with one another.

15. A thickener according to any preceding claim, wherein at least a part of the oil phase is a silicone oil.

16. A thickener according to claim 14, wherein the silicone oil is selected from dimethyl polysiloxane and methyl hydrogen polysiloxane.

17. A method of thickening an aqueous medium containing an electrolyte which method comprises incorporating in the aqueous medium a water-in-oil emulsion, the water phase of which has, in solution therein, a water soluble polymer which is partially or essentially wholly ionic in nature so as to contain ionisable residues derived from at least one unsaturated monomer and additionally including a minor, crosslinked part derived from at least one crosslinking monomer containing at least two unsaturated groups, which method is characterised in that the method additional includes incorporating in the aqueous medium to be thickened at least 20%, by weight of solid said polymer, of an ionic surfactant, which ionic surfactant is soluble to a greater extent in the oil phase of the water-in-oil emulsion than in the water phase.

18. A printing paste thickened by a thickener according to any one of claims 1 to 16.

19. A method of printing a textile material which comprises applying to the textile material a printing paste according to claim 18.

## Patentansprüche

1. Verdickungsmittel zum Eindicken eines einen Elektrolyten enthaltenden wäßrigen Mediums, wobei das Verdickungsmittel umfaßt eine Wasser-in-Öl-Emulsion, deren Wasserphase darin gelöst enthält ein wasserlösliches Polymer, das teilweise oder im wesentlichen vollständig ionischer Natur ist, so daß es ionisierbare Reste enthält, die von zumindest einem ungesättigten Monomer abgeleitet sind und zusätzlich einen kleineren, vernetzten Teil enthält, der von mindestens einem vernetzenden Monomer abgeleitet ist, das mindestens zwei ungesättigte Gruppen enthält, dadurch gekennzeichnet, daß das Verdickungsmittel zusätzlich ein ionisches Tensid enthält, das in einer großen Menge von mindestens 20 Gew.-%, bezogen auf Polymerfeststoff, vorliegt, wobei das ionische Tensid in der Ölphase der Wasser-in-Öl-Emulsion in einem größeren Ausmaß löslich ist als in der Wasserphase.

2. Verdickungsmittel nach Anspruch 1, worin das wasserlösliche Polymer teilweise ionisch und teilweise nichtionisch ist.

3. Verdickungsmittel nach Anspruch 1 oder 2, das mindestens 30 Gew.-% des ionischen Tensids, bezogen auf das Gewicht des Polymerfeststoffes, enthält.

4. Verdickungsmittel nach einem der vorhergehenden Ansprüche, worin das ionische Tensid ein anionisches Tensid, ausgewählt aus Alkalimetallsalzen von Alkylarylsulfonsäuren, Natrium-bis-tridecylsulfosuccinat,

EP 0 186 361 B2

Natriumdioctylsulfosucinat und Mischungen davon, ist.

5. Verdickungsmittel nach einem der Ansprüche 1 bis 4, worin das ionische Tensid ein kationisches Tensid, ausgewählt aus quaternären Ammoniumverbindungen und Derivaten von Fettaminen und -amiden, ist.

6. Verdickungsmittel nach Anspruch 2, worin die nichtionischen Reste von Acrylamid, Methacrylamid und Vinylpyrrolidon abgeleitet sind.

7. Verdickungsmittel nach Anspruch 2 oder 6, worin die ionisierbaren Reste des teilweise ionischen Polymers anionische Ionen liefern.

8. Verdickungsmittel nach Anspruch 7, worin die anionischen Ionen von Resten geliefert werden, die von dem ungesättigten Monomer, ausgewählt aus Acrylsäure, Mathacrylsäure, 2-Acryl-amido-2-methylpropansulfonsäure, 2-Sulfoethylmethacrylat, Styrolphosphonsäure und den Alkalimetallsalzen davon und Natriumstyrolsulfont und Mischungen davon, abgeleitet sind.

9. Verdickungsmittel nach Anspruch 1, 2 oder 6, worin die ionisierbaren Reste des teilweise ionischen Polymers die kationischen Ionen liefern.

10. Verdickungsmittel nach Anspruch 9, worin die kationischen Ionen von Resten geliefert werden, die abgeleitet sind von einem ungesättigten Monomer, ausgewählt aus Dimethylaminoethylacrylat und -methacrylat, quaternisierten Derivaten davon, Diallyldimethylammoniumchlorid, Diallyldiethylammonium- chlorid und Mischungen davon.

11. Verdickungsmittel nach Anspruch 1, worin das wasserlösliche Polymer im wesentlichen vollständig anionischer Natur ist.

12. Verdickungsmittel nach Anspruch 11, worin die anionischen Ionen geliefert werden von Resten, die abgeleitet sind von einem ungesättigten Monomer, ausgewählt aus Acryl- und Methacrylsäure, Alkalimetall- und Ammoniumsalzen davon, 2-Acryl-amido-2-methylpropansulfonsäure, 2-Sulfoethylmethacrylat, Styrolphosphonsäure, Natriumstyrolsulfonat, Phosphonsäurederivaten von Acrylaten und Methacrylaten und Mischungen derselben untereinander.

13. Verdickungsmittel nach einem der vorhergehenden Ansprüche, worin das vernetzende Monomer in dem Polymer in einer Menge von etwa 0,0005 bis etwa 5 %, bezogen auf das Gesamtgewicht der Monomeren, vorliegt.

14. Verdickungsmittel nach einem der vorhergehenden Ansprüche, worin das vernetzende Monomer Allylmethacrylat, Methylen-bisacrylamid, Diallylphthalat, Diallylharnstoff, ein Glycoldiacrylat oder -methacrylat, Triallylcyanurat oder - isocyanurat, ein polyfunktioneller Alkylenäther oder eine Mischung derselben untereinander ist.

15. Verdickungsmittel nach einem der vorhergehenden Ansprüche, worin mindestens ein Teil der Ölphase ein Silikonöl ist.

16. Verdickungsmittel nach Anspruch 14, worin das Silikonöl ausgewählt wird aus Dimethylpolysiloxan und Methylhydrogenpolysiloxan.

17. Verfahren zum Eindicken eines wäßrigen Mediums, das einen Elektrolyten enthält, das umfaßt die Einarbeitung einer Wasser-in-Öl-Emulsion in das wäßrige Medium, deren Wasserphase gelöst darin enthält ein wasserlösliches Polymer, das teilweise oder im wesentlichen vollständig ionischer Natur ist, so daß es ionisierbare Reste enthält, die abgeleitet sind von mindestens einem ungesättigten Monomer und das zusätzlich enthält einen kleineren, vernetzten Teil, der von mindestens einem vernetzenden Monomer abgeleitet ist, das mindestens zwei ungesättigte Gruppen enthält, dadurch gekennzeichnet, daß das Verfahren zusätzlich umfaßt die Einarbeitung eines ionischen Tensids in einer Menge von mindestens 20 %, bezogen auf das Gewicht des Polymerfeststoffes, in das einzudickende wäßrige Medium, wobei das ionische Tensid in der Ölphase der Wasser-in-Öl-Emulsion in einem größeren Umfang löslich ist als in der Wasserphase.

18. Druckpaste, die durch ein Verdickungsmittel nach einem der Ansprüche 1 bis 16 eingedickt ist.

13

**19.** Verfahren zum Bedrucken eines Textilmaterials, das umfaßt das Aufbringen einer Druckpaste nach Anspruch 18 auf das Textilmaterial.

## Revendications

**1.** Epaississant pour épaissir un milieu aqueux contenant un électrolyte, lequel épaississant comprend une émulsion eau dans l'huile, dont la phase d'eau contient, en solution, un polymère soluble dans l'eau qui est partiellement ou essentiellement totalement de nature ionique, afin de contenir des résidus ionisables dérivés d'au moins un monomère saturé et comprenant additionnellement une partie mineure, réticulée, dérivés d'au moins un monomère réticulant contenant au moins deux groupes insaturés, caractérisé en ce que l'épaississant contient additionnellement un agent tensio-actif ionique, présent en une grande quantité d'au moins 20%, en poids dudit polymère solids, lequel agent tensio-actif ionique est soluble à un point plus important dans la phase d'huile d'une émulsion eau dans l'huile que dans la phase d'eau.

**2.** Epaississant selon la revendication 1, où le polymère soluble dans l'eau est partiellement ionique et partiellement non ionique.

**3.** Epaississant selon les revendications 1 ou 2, qui contient au moins 30%, en poids dudit polymère solidc, dudit agent tensio-actif ionique.

**4.** Epaississant selon toute revendication précédente, où ledit agent tensio-actif ionique est un agent tensio-actif anionique choisi parmi des sels de métaux alcalins d'acides alkylarylsulfoniques, le bis tridécyl sulfosuccinate de sodium, le dioctylsulfoccinate de sodium et leurs mélanges.

**5.** Agent épaississant selon l'une des revendications 1 à 4, où l'agent tensio-actif ionique est un agent tensio-actif cationique choisi parmi das composés d'ammonium quaternaire et dérivés d'amines grasses et d'amides.

**6.** Epaississant selon la revendication 2, où les résidus non ioniques sont dérivés d'acrylamide, méthacrylamide et vinyl pyrrolidone.

**7.** Epaississant selon les revendications 2 ou 6, où les résidus ionisables dudit polymère partiellement ionique forment lesdits ions anioniques.

**8.** Epaississant selon la revendication 7, où les ions anioniques sont formés par des résidus dérivés dudit monomère insaturé choisi parmi l'acide acrylique, l'acide méthacrylique, l'acide 2-acrylamino-2-méthylpropanesulfonique, le méthacrylate de 2-sulfoéthyle, l'acide styrène phosphonique et leurs sels de métaux alcalins et le styrène sulfonate de sodium et leurs mélanges.

**9.** Epaississant selon la revendication 1, 2 ou 6, où les résidus ionisables dudit polymère partiellement ionique forment lesdits ions cationiques.

**10.** Epaississant selon la revendication 9, où les ions cationiques sont formés de résidus dérivés dudit monomère insaturé choisi parmi les diméthylaminoéthyl acrylate et méthacrylate, leurs dérivés quaternisés, le chlorure de diallyl diméthyl ammonium, le chlorure de diallyl diéthyl ammonium et leurs mélanges.

**11.** Epaississant selon la revendication 1, où le polymère soluble dans l'eau est essentiellement totalement anionique par sa nature.

**12.** Epaississant selon la revendication 11, où les ions anioniques sont formés de résidus dérivés dudit monomère insaturé choisi parmi les acides acrylique et méthacrylique, leurs sels de métaux alcalins et d'ammonium, l'acide 2-acrylamido-2-méthyl-propane sulfonique, le 2-sulfoéthyl méthacrylate, l'acide styrène phosphonique, le styrène sulfonate de sodium, des dérivés d'acide phosphonique d'acrylates et méthacrylates et mélanges de chacun de ceux-ci les uns avec les autres.

**13.** Epaississant selon toute revendication précédente, où ledit monomère réticulant est présent dans le polymère en une quantité d'environ 0,0005 à environ 5%, en se basant sur le poids total des monomères.

**14.** Epaississant selon toute revendication précédente, où le monomère réticulant est le méthacrylate d'allyle, le méthylène-bis-acrylate, le diallyl phtalate, le diallyl urée, un glycol diacrylate ou méthacrylate, le triallylcyanurate ou isocyanurate, un alkylène éther polyfonctionnel ou un mélange de chacun de ceux-ci avec un autre.

15. Epaississant selon toute revendication précédente, où au moins une partie de la phase d'huile est une huile de silicone.

16. Epaississant selon la revendication 14, où l'huile de silicone est choisie parmi le diméthyl polysiloxane et le méthyl hydrogénopolysiloxane.

17. Méthode d'épaississement d'un milieu aqueux contenant un électrolyte, laquelle méthode comprend l'incorporation, dans le milieu aqueux, d'une émulsion eau dans l'huile, dont la phase d'eau contient, en solution, un polymère soluble dans l'eau qui est partiellement ou essentiellement totalement de nature ionique afin de contenir des résidus ionisables dérivés d'au moins un monomère insaturé et comprenant additionnellement une partie mineure, réticulée, dérivée d'au moins un monomère réticulant contenant au moins deux groupes insaturés, laquelle méthode est caractérisée en ce qu'elle comprend de plus l'incorporation, dans le milieu aqueux à épaissir, d'au moins 20%, en poids dudit polymère solide, d'un agent tensio-actif ionique, lequel agent tensio-actif ionique est soluble à un point plus important dans la phase d'huile de l'émulsion eau dans l'huile que dans la phase d'eau.

18. Pâte d'impression épaissie par un épaississant selon l'une quelconque des revendications 1 à 16.

19. Méthode d'impression d'une matière textile qui comprend l'application à la matière textile d'une pâte d'impression selon la revendication 18.